# EUROPÄISCHE PATENTSCHRIFT

(11) **EP 3 322 601 B1**
(45) Veröffentlichungstag und Bekanntmachung des Hinweises auf die Patenterteilung: **18.12.2019**
(21) Anmeldenummer: 16728687.1
(22) Anmeldetag: 13.06.2016
(51) Int. Cl.: B60G 21/05, B60K 7/00, B60K 17/04

(54) **ANTREIBBARE VERBUNDLENKERACHSE EINES FAHRZEUGES MIT ZWEI LÄNGSLENKERN**
DRIVEABLE TWIST BEAM AXLE OF A VEHICLE HAVING TWO TRAILING ARMS
ESSIEU SEMI-RIGIDE ENTRAÎNÉ D'UN VÉHICULE À MOTEUR, POURVU DE DEUX BRAS OSCILLANTS LONGITUDINAUX

(30) Priorität: 16.07.2015 DE 102015213356
(43) Veröffentlichungstag der Anmeldung: 23.05.2018
(73) Patentinhaber: ZF Friedrichshafen AG, 88046 Friedrichshafen (DE)
(72) Erfinder: WULF, Markus, 32479 Hille (DE); HOLTHEIDE, Josef, 49434 Neuenkirchen (DE); NORDLOH, Alfons, 49429 Visbek (DE); KALLASS, Felix, 49084 Osnabrück (DE); BEYER, Michael, 32457 Porta Westfalica (DE)
(86) Internationale Anmeldenummer: PCT/EP2016/063427
(87) Internationale Veröffentlichungsnummer: WO 2017/008968

(56) Entgegenhaltungen:
- EP-A1- 2 815 905
- EP-A1- 2 818 350
- EP-A2- 1 323 565
- WO-A1-2006/030921
- WO-A1-2013/034372
- WO-A1-2014/042024
- CN-U- 204 222 580
- DE-A1-102011 005 625
- DE-A1-102011 009 040
- DE-A1-102011 011 011
- DE-A1-102011 080 037
- JP-A- 2007 161 032
- US-A1- 2011 132 673

## Beschreibung

Die Erfindung betrifft eine antreibbare Verbundlenkerachse eines Fahrzeuges mit zwei Längslenkern gemäß der im Oberbegriff des Patentanspruches 1 näher definierten Art.

Aus der DE 10 2011 005 625 A1, die den Oberbegriff des Anspruchs 1 offenbart, ist eine solche Verbundlenkerachse bekannt. Hierbei erfolgt mittels Verbindungsschrauben eine gemeinsame Anbindung von Längslenker, Dämpfer und Feder an einem Gehäuse.

Der JP 2007 161032 A ist eine Radaufhängung mit einem an einem Gehäuse befestigten Dämpfer zu entnehmen. Ein weiteres Ausführungsbeispiel zeigt die Befestigung eines Lenkers an einem Gehäuse, wobei in diesem Fall der Dämpfer mit einem Torsionsprofil verbunden ist.

Aus der Praxis bekannte antreibbare Verbundlenkerachsen umfassen üblicherweise ein Querprofil und endseitig des Querprofils jeweils damit verbundene Längslenker, über die die Verbundlenkerachsen jeweils an einer Fahrzeugkarosserie angebunden sind. Zusätzlich sind im Bereich der Längslenker jeweils elektrische Maschinen vorgesehen, über die mit den Längslenkern wirkverbundene Räder in gewünschtem Umfang mit Drehmoment beaufschlagbar sind. In Abhängigkeit des jeweils vorliegenden Anwendungsfalles sind die Räder direkt von den elektrischen Maschinen oder über zwischengeschaltete Getriebeeinrichtungen mit Drehmoment beaufschlagbar. Dabei werden die elektrischen Maschinen und gegebenenfalls die Getriebeeinrichtungen in Gehäusen angeordnet, um diese gegenüber Umwelteinflüssen in gewünschtem Umfang abschirmen zu können.

Die DE 10 2011 005 624 A1 beschreibt eine Antriebsvorrichtung zum Antreiben eines Rades einer Achse für ein elektrisch antreibbares Fahrzeug bzw. eine antreibbare Verbundlenkerachse. Die Antriebsvorrichtung umfasst eine elektrische Maschine und zwei in Kraftflussrichtung im Zugbetrieb betrachtet abtriebseitig der elektrischen Maschine in Reihe geschaltete Planetengetriebe. Ein Gehäuse der elektrischen Maschine oder das Gehäuse der zwei Planetengetriebe sind bei einer Verwendung im Bereich einer antreibbaren Verbundlenkerachse direkt mit dem Längslenker der Fahrzeugachse verbunden, vorzugsweise verschraubt, als mehrteiliges Schweißbauteil in den Längslenker integriert oder mit dem Längslenker einteilig ausgeführt. Für den Fall einer Federbeinachse kann das Gehäuse der elektrischen Maschine oder das Gehäuse der beiden Planetengetriebe direkt mit dem Radträger verbunden, vorzugsweise verschraubt, als mehrteiliges Schweißbauteil in den Radträger integriert oder mit dem Radträger einteilig ausgeführt sein. Die elektrische Maschine und die Planetengetriebe können auch ein gemeinsames Gehäuse aufweisen.

Des Weiteren beschreibt die DE 10 2011 005 625 A1 eine Antriebsvorrichtung zum Antreiben eines Rades einer Verbundlenkerachse für ein elektrisch antreibbares Fahrzeug, die eine elektrische Maschine und ein in Kraftflussrichtung im Zugbetrieb betrachtet abtriebsseitig der elektrischen Maschine geschaltetes Getriebe umfasst. Das Gehäuse der elektrischen Maschine oder das Gehäuse des Getriebes ist direkt mit dem Längslenker der Verbundlenkerachse verschraubt, als mehrteiliges Schweißbauteil in den Längslenker integriert oder mit dem Längslenker einteilig ausgeführt.

Jede dieser Verbundlenkerachsen weist eine eigenständige konstruktive Gestaltung auf, die auf das jeweilige Fahrzeug abstellt, in welchem die Verbundlenkerachse verbaut ist.

Der Erfindung liegt die Aufgabe zugrunde, eine eingangs genannte antreibbare Verbundlenkerachse bereitzustellen, die mit geringerem Aufwand für unterschiedliche Nutzerbedürfnisse in unterschiedlicher Ausgestaltung herstellbar ist.

Diese Aufgabe wird erfindungsgemäß durch eine antreibbare Verbundlenkerachse mit den Merkmalen des Patentanspruches 1 gelöst.

Die erfindungsgemäße antreibbare Verbundlenkerachse eines Fahrzeugs umfasst zwei Längslenker und ein mit den Längslenkern verbundenes Querprofil. Die Längslenker weisen jeweils ein Gehäuse für zumindest eine elektrische Maschine und jeweils einen am Gehäuse angebrachten Längslenkerbereich auf, über die die Verbundlenkerachse an einer Fahrzeugkarosserie anbindbar ist.

Erfindungsgemäß weisen die Gehäuse jeweils eine zum Anbringen unterschiedlicher Längslenkerbereiche vorbereitete Befestigungsbasis auf und zum Komplettieren der Verbundlenkerachse ist jeweils an einer Befestigungsbasis ein Längslenkerbereich angebracht, der aus einer Gruppe von zumindest zwei Längslenkerbereichen ausgewählt ist, die zumindest hinsichtlich der Anbindung der Verbundlenkerachse jeweils an einer Fahrzeugkarosserie und/oder hinsichtlich einer Anbindung der Längslenker an das Querprofil unterschiedlich ausgebildet sind, jedoch die gleichen Anschlussmaße aufweisen.

Damit wird ein modulares Verbundlenkerachsenkonzept verwirklicht, das auf einem Gehäusegrundmodul der Verbundlenkerachse aufbaut, wobei das Gehäusegrundmodul einschließlich der darin angeordneten elektrischen Maschine für alle Varianten im Wesentlichen gleich gestaltbar ist.

Durch die Auswahl aus unterschiedlichen Längslenkerbereichen können jeweilige Kundenwünsche im Hinblick auf eine einfache oder aufwändig gebildete Verbundlenkerachse erfüllt werden. Dabei können trotz verbesserten Nutzens die Kosten durch Verwendung von Gleichteilen bzw. eines im Wesentlichen einheitlichen Gehäusegrundmoduls sowie erforderlicher Zusatzbauteile reduziert werden.

Bei weiteren eine hohe Modularität zur Verfügung stellenden Ausführungsformen der erfindungsgemäßen Verbundlenkerachse weisen die Gehäuse jeweils eine zum Anbringen unterschiedlicher Federaufnahmebereiche und/oder Dämpferaufnahmebereiche vorbereitete Befestigungsbasis auf, wobei zum Komplettieren der Verbundlenkerachse jeweils an einer Befestigungsbasis ein Federaufnahmebereich und/oder ein Dämpferaufnahmebereich angebracht ist, der jeweils aus einer Gruppe von zumindest zwei Federaufnahmebereichen und/oder von zumindest zwei Dämpferaufnahmebereichen ausgewählt ist, die zumindest hinsichtlich der Anbindung einer Feder und/oder eines Dämpfers jeweils unterschiedlich gebildet sind, jedoch die gleichen Anschlussmaße aufweisen.

Ist die erfindungsgemäße antreibbare Verbundlenkerachse über im Bereich der Längslenkerbereich vorgesehene Gummilagereinrichtungen karosserieseitig festlegbar, ist die erfindungsgemäße Verbundlenkerachse mit geringem Aufwand in verschiedene Fahrzeugkonzepte integrierbar und ein gewünschtes Fahrverhalten mit geringem Aufwand darstellbar.

Bei einer einfach montierbaren Ausführungsform der erfindungsgemäßen antreibbaren Verbundlenkerachse sind Innenräume der Gehäuse der Längslenker radseitig jeweils über einen Deckel begrenzt.

Innenräume der Gehäuse der Längslenker sind bei einer hierzu alternativen Ausführungsform der erfindungsgemäßen antreibbaren Verbundlenkerachse radseitig jeweils über einteilig mit den Gehäusen ausgeführte Gehäusewände begrenzt, womit im Bereich eines Rades angreifende Radkräfte in gewünschtem Umfang über das Gehäuse des Längslenkers in die Fahrzeugkarosserie einleitbar sind und aufwändige Dichtmaßnahmen vermieden sind.

Ist im Bereich der radseitigen Deckel oder der radseitigen Gehäusewände jeweils eine Radachse über ein Radlager drehbar gelagert und/oder jeweils eine Bremsanlage angebunden, sind kundenspezifische Anforderungen wiederum mit geringem Aufwand umsetzbar und die erfindungsgemäße antreibbare Verbundlenkerachse ist mit geringen Herstellkosten zur Verfügung stellbar.

Bei einer bauraum- und kostengünstigen Weiterbildung der erfindungsgemäßen antreibbaren Verbundlenkerachse ist in den Gehäusen jeweils im Kraftfluss zwischen den elektrischen Maschinen und Radachsen eine Getriebeeinrichtung angeordnet, über die eine Antriebsleistung der elektrischen Maschinen in gewünschtem Umfang gewandelt im Bereich der Radachsen anlegbar ist. Damit besteht mit geringem Aufwand die Möglichkeit, die elektrische Maschine entsprechend kleiner zu dimensionieren und die erfindungsgemäße antreibbare Verbundlenkerachse insgesamt bauraum- und kostengünstig herzustellen.

Werden die Längslenker zumindest teilweise mittels eines Aluminium-Sandguss-Verfahrens gefertigt, ist die erfindungsgemäße antreibbare Verbundlenkerachse mit geringen Fertigungskosten herstellbar.

Ist das Querprofil zumindest teilweise aus Stahl hergestellt, sind im Bereich der Räder angreifende Radkräfte in gewünschtem Umfang abstützbar und in die Fahrzeugkarosserie einleitbar.

Sowohl die in den Patentansprüchen angegebenen Merkmale als auch die in den nachfolgenden Ausführungsbeispielen der erfindungsgemäßen antreibbaren Verbundlenkerachse angegebenen Merkmale sind jeweils für sich alleine oder in beliebiger Kombination miteinander geeignet, den erfindungsgemäßen Gegenstand weiterzubilden.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine Explosionsdarstellung eines Längslenkers einer ersten Ausführungsform der erfindungsgemäßen antreibbaren Verbundlenkerachse in einer Seitenansicht;
- Fig. 2: den Längslenker gemäß Fig. 1 in einer Explosionsdarstellung in einer Ansicht von oben;
- Fig. 3: den Längslenker gemäß Fig. 1 in einer Explosionsdarstellung in einer Ansicht von schräg oben;
- Fig. 4: eine Fig. 1 entsprechende Darstellung eines Längslenkers einer zweiten Ausführungsform der erfindungsgemäßen antreibbaren Verbundlenkerachse;
- Fig. 5: den Längslenker gemäß Fig. 4 in einer Fig. 2 entsprechenden Darstellung;
- Fig. 6: den Längslenker gemäß Fig. 4 in einer im Wesentlichen Fig. 3 entsprechenden Darstellung;
- Fig. 7: einen Längslenkerbereich des Längslenkers gemäß Fig. 4 mit einem mit dem Längslenkerbereich verbunden Querprofil des zweiten Ausführungsbeispieles der antreibbaren Verbundlenkerachse; und
- Fig. 8: das Querprofil und den Längslenkerbereich aus einer in Fig. 7 näher gekennzeichneten Ansicht VIII.

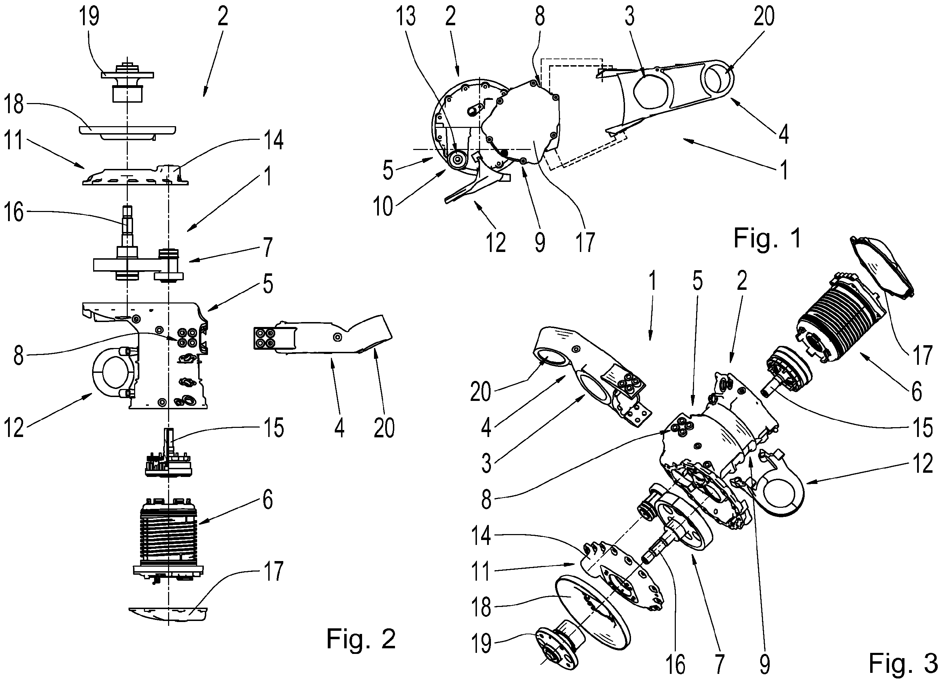

Fig. 1 zeigt eine Seitenansicht eines Längslenkers 1 einer ersten Ausführungsform einer antreibbaren Verbundlenkerachse 2 in einer Explosionsdarstellung. Die antreibbare Verbundlenkerachse 2 weist in Einbaulage in einem Fahrzeug auf jeder Fahrzeugseite einen in Fig. 1 gezeigten Längslenker 1 auf, die im Wesentlichen in Fahrzeuglängsrichtung verbaut sind und im Bereich von Aufnahmen 3 eines Längslenkerbereiches 4 vorzugsweise form- und kraftschlüssig mit einem sich in Fahrzeugquerrichtung erstreckenden Querprofil verbunden sind.

Fig. 2 und Fig. 3 zeigen jeweils den ein Gehäuse 5 umfassenden Längslenker 1 gemäß Fig. 1 in einer Explosionsdarstellung in einer Ansicht von oben bzw. einer Ansicht von schräg oben. Das Gehäuse 5 bildet einen sogenannten Grundträger eines Baukastenprinzips der antreibbaren Verbundlenkerachse 2, in welchen ein eine elektrische Maschine 6 und eine Getriebeeinrichtung 7 umfassender Antriebsstrang der antreibbaren Fahrzeugachse 2 integriert ist. Des Weiteren ist das Gehäuse 5 mit verschiedenen vorbereiteten Befestigungsbasen 8 bis 10 ausgeführt.

Zum Komplettieren der antreibbaren Verbundlenkerachse 2 ist im Bereich der Befestigungsbasis 8 der Längslenkerbereich 4 am Gehäuse 5 anbringbar, der aus einer Gruppe von zumindest zwei Längslenkerbereichen ausgewählt ist, die zumindest hinsichtlich der Anbindung der Verbundlenkerachse 2 jeweils an einer Fahrzeugkarosserie und/oder hinsichtlich einer Anbindung des Längslenkers 1 an ein Querprofil der Verbundlenkerachse 2 unterschiedlich gebildet sind, jedoch die gleichen Anschlussmaße aufweisen, die mit der Befestigungsbasis 8 korrespondieren.

Im Bereich der Befestigungsbasis 9 sind jeweils unterschiedliche Federaufnahmebereiche am Gehäuse 5 anbringbar, die aus einer Gruppe von zumindest zwei Federaufnahmebereichen auswählbar sind, die zumindest hinsichtlich der Anbindung einer Feder jeweils unterschiedlich gebildet sind, jedoch die gleichen und mit der Befestigungsbasis 9 korrespondierende Anschlussmaße aufweisen.

Zusätzlich ist das Gehäuse 5 im Bereich der Befestigungsbasis 10 mit jeweils unterschiedlichen Dämpferaufnahmebereichen verbindbar, die aus einer Gruppe von zumindest zwei Dämpferaufnahmebereichen auswählbar sind, die zumindest hinsichtlich der Anbindung eines Dämpfers am Längslenker 1 jeweils unterschiedlich gebildet sind, jedoch die gleichen wiederum mit der Befestigungsbasis 10 korrespondierende Anschlussmaße aufweisen.

Über die vorbeschriebene Ausführung des Gehäuses 5 mit den Befestigungsbasen 8 bis 10 ist die antreibbare Verbundlenkerachse 2 in hohem Maße bei gleichzeitig geringen Herstellkosten variabel ausführbar bzw. gestaltbar. Die Fertigungskosten der antreibbaren Verbundlenkerachse 2 werden unter anderem dadurch begrenzt, dass das Gehäuse 5 für verschiedene Fahrzeugkonzepte standardisiert ausgeführt ist und in Richtung einer Radanbindung 11, in Richtung des Längslenkerbereiches 4, in Richtung des Federaufnahmebereiches 12 und in Richtung des Dämpferaufnahmebereiches 13 standardisierte Schnittstellen bzw. Anbindungsbereiche 8 bis 10 aufweist, mit welchen jeweils an verschiedene Fahrzeugkonzepte angepasste Längslenkerbereiche, Deckelelemente 14 der Radanbindung 11, Federaufnahmebereiche 12 sowie Dämpferanbindungsbereiche 13 am Gehäuse 5 anbringbar sind. Damit besteht auf einfache Art und Weise die Möglichkeit, das Gehäuse 5 für verschiedene Anwendungen standardisiert bzw. gleich auszuführen und den Längslenkerbereich 4, den Federaufnahmebereich 12, den Dämpferaufnahmebereich 13 und das Deckelelement 14 im Sinne von Adapterelementen unterschiedlich zu konfigurieren. Dabei sind der Längslenkerbereich 4, der Federaufnahmebereich 12, der Dämpferaufnahmebereich 13 und das Deckelelement 14 jeweils im Bereich der Schnittstelle zum Gehäuse 5 für verschiedene Fahrzeugkonzepte jeweils identisch ausgeführt.

Bei der Montage der antreibbaren Verbundlenkerachse 2 wird die elektrische Maschine 6 ausgehend von der der Radseite des Längslenkers 1 abgewandten Seite in das Gehäuse 5 eingesetzt, während die Getriebeeinrichtung 7 (Stirnradstufe) ausgehend von der Radseite des Längslenkers 1 in das Gehäuse 5 eingebaut wird. Eine Planetenträgerwelle 15 der elektrischen Maschine 6, die in Abhängigkeit des jeweils vorliegenden Anwendungsfalles rein motorisch oder motorisch und generatorisch betreibbar ist, wird mit der vorliegend mit einer Stirnradstufe und/oder einem Planetengetriebe ausgeführten Getriebeeinrichtung 7 gekoppelt und steht über die Getriebeeinrichtung 7 mit einer Radwelle 16 in Wirkverbindung. Anschließend wird das Gehäuse 5 über das Deckelelement 14 radseitig und über ein weiteres Deckelelement 17 auf der der Radseite abgewandten Seite des Längslenkers 1 verschlossen. Zusätzlich ist bei dem in der Zeichnung dargestellten Ausführungsbeispiel am Deckelelement 14 ein Innenblech 18 einer Trommelbremse befestigt, an das sich wiederum ein Radträger 19 anschließt. Alternativ kann auch eine Scheibenbremsanlage vorgesehen sein.

Wiederum alternativ hierzu kann es auch vorgesehen sein, dass sowohl die elektrische Maschine 6 als auch die Getriebeeinrichtung 7 und 15 ausgehend von der der Radseite abgewandten Seite des Längslenkers in das Gehäuse 5 eingesetzt werden, wenn das Gehäuse 5 radseitig einteilig mit dem Deckelelement 14 ausgeführt ist. Zusätzlich hierzu besteht alternativ auch die Möglichkeit, dass das Gehäuse 5 des Längslenkers 1 auf der der Radseite abgewandten Seite einteilig mit dem Deckelelement 17 ausgebildet ist und die elektrische Maschine 6 gemeinsam mit der Getriebeeinrichtung 7 und 15 von der Radseite in das Gehäuse 5 eingesetzt und in diesem montiert werden und das Gehäuse 5 anschließend mittels des Deckelelementes 14 in gewünschtem Umfang dichtend gegenüber der Umgebung verschließbar ist.

Des Weiteren kann es in Abhängigkeit des jeweils vorliegenden Anwendungsfalles vorgesehen sein, dass der Federaufnahmebereich und der Dämpferaufnahmebereich gemeinsam im Bereich einer gemeinsamen Befestigungsbasis am Gehäuse 5 anbindbar sind, wobei das Feder- und das Dämpferelement dann vorzugsweise koaxial zueinander angeordnet sind.

Sowohl das Gehäuse 5 als auch die jeweils am Gehäuse befestigbaren weiteren Bauteile, wie der Längslenkerbereich 4, der Federaufnahmebereich 12, der Dämpferaufnahmebereich 13, das Deckelelement 14, das weitere Deckelelement 17, das Innenblech 18 und der Radträger 19 sind in Abhängigkeit des jeweils vorliegenden Anwendungsfalles als Gussteil, als Schmiedeteil, als Frästeil, als Biegeumformteil, als Tiefziehteil oder dergleichen ausführbar, wobei die Anbindungen zwischen dem Gehäuse 5 und dem Längslenkerbereich 4, dem Federaufnahmebereich 12 und dem Dämpferaufnahmebereich 13 jeweils über Kleben, Schrauben, Nieten oder weitere geeignete Befestigungsmaßnahmen vorgesehen werden kann.

Die Aufnahme 3 des Längslenkers 1 umfasst vorliegend eine wenigstens annähernd polygonförmige Öffnung auf, in welche das wenigstens annähernd rohrförmig ausgeführte und in Fig. 1 bis Fig. 3 nicht näher dargestellte Querprofil der antreibbaren Verbundlenkerachse 2 montierbar ist. Über die Polygonverbindung ist eine form- und/oder kraftschlüssige feste Verbindung zwischen dem Querprofil und den Längslenkern 1 der Verbundlenkerachse 2 herstellbar, die einen einfachen Austausch des Längslenkers 1 und gegebenenfalls des Torsionsrohres bzw. des Querprofils unabhängig vom Gehäuse 5 ermöglicht. Alternativ zu einer Polygonverbindung kann auch eine Schraubverbindung eingesetzt werden.

Dadurch ist insbesondere eine günstigere Kaskoeinstufung eines mit der Verbundlenkerachse 2 ausgeführten Fahrzeuges erreichbar, da Reparaturkosten einer im Bereich des Längslenkerbereiches 4 oder des Querprofils beschädigten Verbundlenkerachse niedriger sind als bei einem erforderlichen Komplettaustausch eines einteilig ausgeführten Längslenkers einer antreibbaren Verbundlenkerachse.

Der Längslenkerbereich 4 ist mit einem Lagerauge 20 ausgebildet, in dessen Bereich ein vorzugsweise als Gummilager ausgeführtes Hauptlager einsetzbar ist, über das die Verbundlenkerachse 2 in an sich bekannter Art und Weise im Bereich der Fahrzeugkarosserie eines Fahrzeuges angebunden ist.

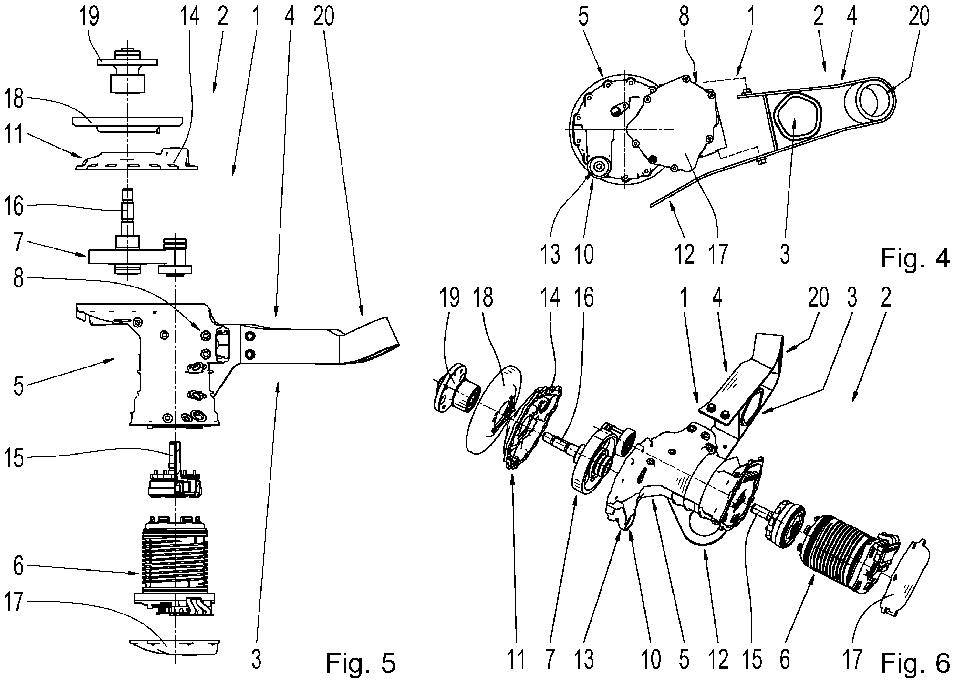

In Fig. 4 bis Fig. 8 ist eine zweite Ausführungsform der antreibbaren Verbundlenkerachse 2 gezeigt, die im Wesentlichen der in Fig. 1 bis Fig. 3 gezeigten ersten Ausführungsform der Verbundlenkerachse 2 entspricht, weshalb bezüglich der weiteren Funktionsweise auf die vorstehende Beschreibung zu Fig. 1 bis Fig. 3 verwiesen wird und in der nachfolgenden Beschreibung lediglich auf die Unterschiede zwischen den beiden Ausführungsformen der Verbundlenkerachse 2 näher eingegangen wird.

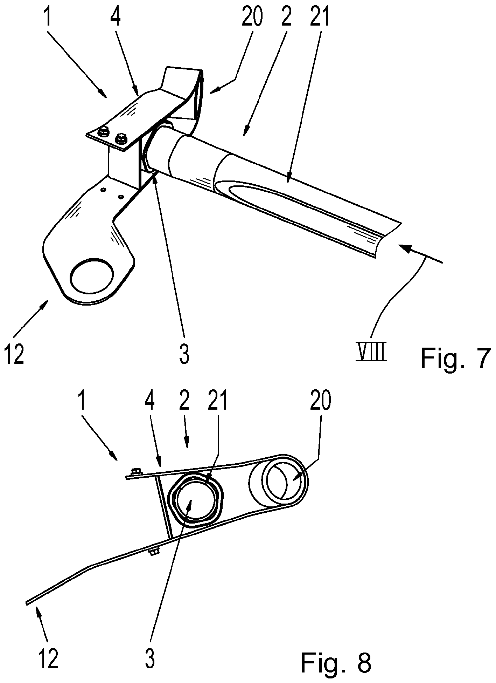

Bei der Verbundlenkerachse 2 gemäß Fig. 4 bis Fig. 8 sind der Federaufnahmebereich 12 und der Dämpferaufnahmebereich 13 einteilig mit dem Längslenkerbereich 4 ausgeführt und das Gehäuse 5 ist lediglich mit der Befestigungsbasis 8 ausgebildet, womit die Verbundlenkerachse 2 bzw. der Längslenker 1 gemäß Fig. 4 bis Fig. 8 im Vergleich zur ersten Ausführungsform der Verbundlenkerachse 2 einfacher zu montieren ist, jedoch durch eine geringere Modularität gekennzeichnet ist. Fig. 7 und Fig. 8 zeigen zusätzlich den einteilig mit dem Federaufnahmebereich 12 und dem Dämpferaufnahmebereich 13 ausgeführten Längslenkerbereich 4 in mit dem Querprofil 21 verbundenen Zustand.

### Bezugszeichen

- 1: Längslenker
- 2: antreibbare Verbundlenkerachse
- 3: Aufnahme
- 4: Längslenkerbereich
- 5: Gehäuse
- 6: elektrische Maschine
- 7: Getriebeeinrichtung
- 8 bis 10: Befestigungsbasis
- 11: Radanbindung
- 12: Federaufnahmebereich
- 13: Dämpferaufnahmebereich
- 14: Deckelelement
- 15: Planetenträgerwelle
- 16: Radwelle
- 17: weiteres Deckelelement
- 18: Innenblech einer Trommelbremse
- 19: Radträger
- 20: Lagerauge des Längslenkers
- 21: Querprofil der Verbundlenkerachse

## Patentansprüche

1. Antreibbare Verbundlenkerachse (2) eines Fahrzeuges mit zwei Längslenkern (1) und einem mit den Längslenkern (1) verbundenen Querprofil (11), wobei die Längslenker (1) jeweils ein Gehäuse (5) für zumindest eine elektrische Maschine (6) und jeweils einen am Gehäuse (5) angebrachten Längslenkerbereich (4) aufweisen, über die die Verbundlenkerachse (2) an einer Fahrzeugkarosserie anbindbar ist, **dadurch gekennzeichnet, dass**
- die Gehäuse (5) jeweils eine zum Anbringen unterschiedlicher Längslenkerbereiche (4) vorbereitete Befestigungsbasis (8) aufweisen und dass zum Komplettieren der Verbundlenkerachse (2) jeweils an einer Befestigungsbasis (8) ein Längslenkerbereich (4) angebracht ist, der aus einer Gruppe von zumindest zwei Längslenkerbereichen (4) ausgewählt ist, die zumindest hinsichtlich der Anbindung der Verbundlenkerachse (2) jeweils an einer Fahrzeugkarosserie und/oder hinsichtlich einer Anbindung der Längslenker (1) an das Querprofil (21) unterschiedlich gebildet sind, jedoch die gleichen Anschlussmaße aufweisen,
- die Gehäuse (5) jeweils eine zum Anbringen unterschiedlicher Federaufnahmebereiche (12) vorbereitete Befestigungsbasis (9) aufweisen und dass zum Komplettieren der Verbundlenkerachse (2) jeweils an einer Befestigungsbasis (9) ein Federaufnahmebereich (12) angebracht ist, der aus einer Gruppe von zumindest zwei Federaufnahmebereichen (12) ausgewählt ist, die zumindest hinsichtlich der Anbindung einer Feder jeweils unterschiedlich gebildet sind, jedoch die gleichen Anschlussmaße aufweisen,
- die Befestigungsbasis (8) zum Anbringen unterschiedlicher Längslenkerbereiche (4) und die Befestigungsbasis (9) zum Anbringen unterschiedlicher Federaufnahmebereiche (12) verschieden ausgeführt sind.

2. Antreibbare Verbundlenkerachse nach Anspruch 1, **dadurch gekennzeichnet, dass** die Gehäuse (5) jeweils eine zum Anbringen unterschiedlicher Dämpferaufnahmebereiche (13) vorbereitete Befestigungsbasis (10) aufweisen und dass zum Komplettieren der Verbundlenkerachse (2) jeweils an einer Befestigungsbasis (10) ein Dämpferaufnahmebereich (13) angebracht ist, der aus einer Gruppe von zumindest zwei Dämpferaufnahmebereichen (13) ausgewählt ist, die zumindest hinsichtlich der Anbindung eines Dämpfers jeweils unterschiedlich gebildet sind, jedoch die gleichen Anschlussmaße aufweisen.

3. Antreibbare Verbundlenkerachse nach einem der Ansprüche 1 oder 2, **dadurch gekennzeichnet, dass** die Verbundlenkerachse (2) über im Bereich der Längslenkerbereiche (4) vorgesehene Gummilagereinrichtungen karosserieseitig festlegbar ist.

4. Antreibbare Verbundlenkerachse nach einem der Ansprüche 1 bis 3, **dadurch gekennzeichnet, dass** Innenräume der Gehäuse (5) der Längslenker (1) radseitig jeweils über einen Deckel (14) begrenzt sind.

5. Antreibbare Verbundlenkerachse nach einem der Ansprüche 1 bis 3, **dadurch gekennzeichnet, dass** Innenräume der Gehäuse der Längslenker radseitig jeweils über einteilig mit den Gehäusen ausgeführte Gehäusewände begrenzt sind.

6. Antreibbare Verbundlenkerachse nach einem der Ansprüche 1 bis 5, **dadurch gekennzeichnet, dass** Innenräume der Gehäuse (5) der Längslenker (1)auf einer einer Radseite abgewandten Seite jeweils über einen Deckel (17) begrenzt sind.

7. Antreibbare Verbundlenkerachse nach einem der Ansprüche 4 bis 6, **dadurch gekennzeichnet, dass** im Bereich der radseitigen Deckel (14) oder der radseitigen Gehäusewände jeweils eine Radachse (16) über ein Radlager drehbar gelagert ist.

8. Antreibbare Verbundlenkerachse nach einem der Ansprüche 4 bis 7, **dadurch gekennzeichnet, dass** im Bereich der radseitigen Deckel (14) oder der radseitigen Gehäusewände jeweils eine Bremsanlage angebunden ist.

9. Antreibbare Verbundlenkerachse nach einem der Ansprüche 1 bis 8, **dadurch gekennzeichnet, dass** in den Gehäusen (5) jeweils im Kraftfluss zwischen den elektrischen Maschinen (6) und Radachsen eine Getriebeeinrichtung (7, 15) angeordnet ist.

10. Antreibbare Verbundlenkerachse nach einem der Ansprüche 1 bis 9, **dadurch gekennzeichnet, dass** die Längslenker (1) zumindest teilweise mittels eines Aluminium-Guss-Verfahrens, insbesondere Aluminium-Sandguss-Verfahrens hergestellt sind.

11. Antreibbare Verbundlenkerachse nach einem der Ansprüche 1 bis 10, **dadurch gekennzeichnet, dass** das Querprofil (21) zumindest teilweise aus Stahl hergestellt ist.

## Claims

1. Drivable torsion beam axle (2) of a vehicle having two trailing arms (1) and a transverse profile (11) which is connected to the trailing arms (1), the trailing arms (1) having in each case one housing (5) for at least one electric machine (6) and in each case one trailing arm region (4) which is attached to the housing (5), via which housings (5) the torsion beam axle (2) can be attached to a vehicle body, **characterized in that**
- the housings (5) have in each case one fastening base (8) which is prepared for attaching different trailing arm regions (4), and **in that** a trailing arm region (4) is attached in each case to a fastening base (8) in order to complete the torsion beam axle (2), which trailing arm region (4) is selected from a group of at least two trailing arm regions (4) which are of different formation at least with regard to the attachment of the torsion beam axle (2) in each case to a vehicle body and/or with regard to an attachment of the trailing arms (1) to the transverse profile (21), but have the same connector dimensions,
- the housings (5) have in each case one fastening base (9) which is prepared for attaching different spring support regions (12), and **in that** a spring support region (12) is attached in each case to a fastening base (9) in order to complete the torsion beam axle (2), which spring support region (12) is selected from a group of at least two spring support regions (12) which are in each case of different formation at least with regard to the attachment of a spring, but have the same connector dimensions,
- the fastening base (8) for attaching different trailing arm regions (4) and the fastening base (9) for attaching different spring support regions (12) are of different configuration.

2. Drivable torsion beam axle according to Claim 1, **characterized in that** the housings (5) have in each case one fastening base (10) which is prepared for attaching different damper support regions (13), and **in that** a damper support region (13) is attached in each case to a fastening base (10) in order to complete the torsion beam axle (2), which damper support region (13) is selected from a group of at least two damper support regions (13) which are in each case of different formation at least with regard to the attachment of a damper, but have the same connector dimensions.

3. Drivable torsion beam axle according to either of Claims 1 and 2, **characterized in that** the torsion beam axle (2) can be fixed on the vehicle body side via rubber bearing devices which are provided in the region of the trailing arm regions (4).

4. Drivable torsion beam axle according to one of Claims 1 to 3, **characterized in that** interior spaces of the housings (5) of the trailing arms (1) are delimited on the wheel side in each case via a cover (14).

5. Drivable torsion beam axle according to one of Claims 1 to 3, **characterized in that** interior spaces of the housings of the trailing arms are delimited on the wheel side in each case via housing walls which are configured in one piece with the housings.

6. Drivable torsion beam axle according to one of Claims 1 to 5, **characterized in that** interior spaces of the housings (5) of the trailing arms (1) are delimited in each case via a cover (17) on a side which faces away from a wheel side.

7. Drivable torsion beam axle according to one of Claims 4 to 6, **characterized in that** in each case one wheel axle (16) is mounted rotatably via a wheel bearing in the region of the wheel-side covers (14) or the wheel-side housing walls.

8. Drivable torsion beam axle according to one of Claims 4 to 7, **characterized in that** in each case one brake system is attached in the region of the wheel-side covers (14) or the wheel-side housing walls.

9. Drivable torsion beam axle according to one of Claims 1 to 8, **characterized in that** a transmission device (7, 15) is arranged in each case in the power flow between the electric machines (6) and the wheel axles in the housings (5).

10. Drivable torsion beam axle according to one of Claims 1 to 9, **characterized in that** the trailing arms (1) are produced at least partially by means of an aluminium casting method, in particular an aluminium sand casting method.

11. Drivable torsion beam axle according to one of Claims 1 to 10, **characterized in that** the transverse profile (21) is produced at least partially from steel.

## Revendications

1. Essieu semi-rigide (2) entraîné d'un véhicule à moteur pourvu de deux bras oscillants longitudinaux (1) et d'un profil transversal (11) lié aux bras oscillants longitudinaux (1), les bras oscillants longitudinaux (1) présentant chacun un boîtier (5) pour au moins une machine électrique (6) et à chaque fois une zone (4) de bras oscillant longitudinal installée sur le boîtier (5), par lesquels l'essieu semi-rigide (2) est rattachable à une carrosserie de véhicule, **caractérisé en ce que**
- les boîtiers (5) présentent chacun une base de fixation (8) préparée pour installer différentes zones (4) de bras oscillant longitudinal et que, afin de compléter l'essieu semi-rigide (2), une zone (4) de bras oscillant longitudinal sélectionnée dans un groupe d'au moins deux zones (4) de bras oscillant longitudinal est respectivement installée sur une base de fixation (8), lesquelles zones, au moins en ce qui concerne le rattachement de l'essieu semi-rigide (2) respectivement à une carrosserie du véhicule et/ou en ce qui concerne un rattachement des bras oscillants longitudinaux (1) au profil transversal (21), sont formées différemment tout en présentant les mêmes dimensions de connexion,
- les boîtiers (5) présentent chacun une base de fixation (9) préparée pour installer différentes zones de réception de ressort (12) et que, afin de compléter l'essieu semi-rigide (2), une zone de réception de ressort (12) sélectionnée dans un groupe d'au moins deux zones de réception de ressort (12) est respectivement installée sur une base de fixation (9), lesquelles zones, au moins en ce qui concerne le rattachement d'un ressort, sont chacune formées différemment tout en présentant les mêmes dimensions de connexion,
- la base de fixation (8) pour installer différentes zones (4) de bras oscillant longitudinal et la base de fixation (9) pour installer différentes zones de réception de ressort (12) sont exécutées différemment.

2. Essieu semi-rigide entraîné selon la revendication 1, **caractérisé en ce que** les boîtiers (5) présentent chacun une base de fixation (10) préparée pour installer différentes zones de réception d'amortisseur (13) et que, afin de compléter l'essieu semi-rigide (2), une zone de réception d'amortisseur (13) est respectivement installée sur une base de fixation (10), laquelle zone est sélectionnée dans un groupe d'au moins deux zones de réception d'amortisseur (13) qui, au moins en ce qui concerne le rattachement d'un amortisseur, sont chacune formées différemment tout en présentant les mêmes dimensions de connexion.

3. Essieu semi-rigide entraîné selon l'une des revendications 1 et 2, **caractérisé en ce que** l'essieu semi-rigide (2) peut être fixé côté carrosserie par des dispositifs à palier caoutchouté prévus dans la zone des zones (4) de bras oscillant longitudinal.

4. Essieu semi-rigide entraîné selon l'une des revendications 1 à 3, **caractérisé en ce que** des espaces intérieurs des boîtiers (5) des bras oscillants longitudinaux (1) sont chacun limités par un couvercle (14) côté roue.

5. Essieu semi-rigide entraîné selon l'une des revendications 1 à 3, **caractérisé en ce que** des espaces intérieurs des boîtiers des bras oscillants longitudinaux côté roue sont chacun limités par des parois de boîtier réalisées d'une seule pièce avec les boîtiers.

6. Essieu semi-rigide entraîné selon l'une des revendications 1 à 5, **caractérisé en ce que** d'un côté opposé au côté roue les espaces intérieurs des boîtiers (5) des bras oscillants longitudinaux (1) sont chacun limités par un couvercle (17).

7. Essieu semi-rigide entraîné selon l'une des revendications 4 à 6, **caractérisé en ce que**, dans la zone des couvercles (14) côté roue ou des parois de boîtier côté roue un axe de roue (16) est respectivement supporté par un roulement de roue de manière à pouvoir tourner.

8. Essieu semi-rigide entraîné selon l'une des revendications 4 à 7, **caractérisé en ce que** dans la zone des couvercles (14) côté roue ou des parois de boîtier côté roue une installation de freinage est respectivement reliée.

9. Essieu semi-rigide entraîné selon l'une des revendications 1 à 8, **caractérisé en ce qu'**un dispositif de transmission (7, 15) est à chaque fois disposé dans les boîtiers (5) dans le flux de force entre les machines électriques (6) et les axes de roues.

10. Essieu semi-rigide entraîné selon l'une des revendications 1 à 9, **caractérisé en ce que** les bras oscillants longitudinaux (1) sont au moins pour partie réalisés au moyen d'un procédé de fonte d'aluminium, en particulier d'un procédé de moulage au sable à base d'aluminium.

11. Essieu semi-rigide entraîné selon l'une des revendications 1 à 10, **caractérisé en ce que** le profil transversal (21) est au moins en partie réalisé en acier.
